# EUROPEAN PATENT APPLICATION

(11) **EP 2 248 622 A1**
(43) Date of publication of application: **10.11.2010**
(21) Application number: 10158563.6
(22) Date of filing: 31.03.2010
(51) Int. Cl.: B23K 9/20, B23K 35/02

(54) **Joining component and fastening arrangement**

(30) Priority: 06.05.2009 DE 102009020080
(71) Applicant: Newfrey LLC, Newark, Delaware 19711 (US)
(72) Inventor: Pimper, Ralf, 35394 Giessen (DE); Gottwals, Haymo, 35394 Giessen (DE); Gerlach, Lothar, 35394 Giessen (DE)
(74) Representative: Witte, Weller & Partner

(57) **Abstract**

Joining component (14) for joining onto a flat workpiece (12), in particular for the purpose of stud welding, having a joining portion (20), by means of which the joining component (14) can be joined onto the workpiece (12), and having a fastening portion (22), which is realized as a single piece with the joining portion (20) and to which at least one further structural element (24) can be fastened, the joining portion (20) having a joining surface (30) that contacts the flat workpiece (12) during joining and has a circumference (42), there being realized in the joining surface (30) at least one recess (40) that extends transversely relative to the circumference (42) and that divides the joining surface (30) into at least two partial surfaces (44) (Fig. 5).

## Description

The present invention relates to a joining component for joining onto a flat workpiece, in particular for the purpose of stud welding, having a joining portion, by means of which the joining component can be joined onto the workpiece, and having a fastening portion, which is realized as a single piece with the joining portion and to which at least one further structural element can be fastened, the joining portion having a joining surface that contacts the flat workpiece during joining and has a circumference.

Further, the present invention relates to a fastening arrangement having a flat workpiece onto which such a joining component is joined.

Such joining components and fastening arrangements are generally known in the domain of so-termed stud welding. In the case of stud welding, an electrically conductive joining component is welded onto a likewise electrically conductive workpiece. In the case of the so-termed drawn arc ignition process, the joining component is placed with the joining portion upon the flat workpiece. A pilot current is then passed through them, and the joining component is raised back from the workpiece, such that an arc is drawn. The current intensity is then increased to that of a welding current, such that the joining portion, in the region of the joining surface, and an opposing surface portion of the workpiece become fused. Finally, the joining component is lowered back onto the workpiece, such that the melts mix together. Upon the thus occurring short-circuit, the welding current is switched off. The combined melt solidifies, and the joining component is connected to the workpiece by material bonding.

This type of stud welding is used very extensively, for example in the automobile industry, joining components, in the form of welding studs, being welded onto the vehicle-body metal sheet. The welding studs then serve as anchors for fastening mount-on parts or for clipping-on plastic clips to which, in turn, other structural elements are fixed, such as electrical lines, brake hoses, etc.

The term stud welding is normally used in connection with rotationally symmetrical joining components. The substantially same type of welding technique is also used, however, to weld flat joining components perpendicularly onto a workpiece (so-termed Weldfast^{R} process). In the present case, the term stud welding is intended to include also the welding-on of such non-rotationally symmetrical components.

Although stud welding is a long-established process, there continues to be a requirement for improved solutions. Under some marginal conditions, for example, the welding quality is not constantly optimal. The marginal conditions in this case can be materials or, also, ambient marginal conditions. It can be the case that the surfaces to be fused do not become fused over the full surface area, such that inadequate weld joints are produced.

To solve this problem, there are a number of approaches, for example welding with magnetic arc deflection. In this case, an electromagnetic field is applied to the region of the joining zone while the arc is burning, in order to deflect, or guide, the arc in a particular manner.

This method, however, is comparatively resource-intensive.

It is therefore the object of the invention to specify an improved joining component and an improved fastening arrangement, in which component and arrangement the attainable or attained weld joints are realized more uniformly, as viewed over the welding surface.

The above object is achieved, in the case of the joining component mentioned at the outset, in that there is realized in the joining surface at least one recess that extends transversely relative to the circumference and that divides the joining surface into at least two partial surfaces.

Further, the above object is achieved by a fastening arrangement having a flat workpiece onto which such a joining component is joined.

The division of the welding surface into at least two partial surfaces enables a more uniform weld distribution to be achieved. In particular, unexpectedly, it is possible to achieve a situation wherein the arc does not burn fixedly at one location. Rather, the arc can burn simultaneously at a plurality of locations (corresponding to the partial surfaces), and can also jump back and forth between the individual partial surfaces.

An overall greater strength of the weld joint can thereby be realized. The joining components can be joined without, or also with, magnetic arc deflection.

The above object is thus achieved in full.

It is particularly advantageous if the recess is realized as an elongate groove.

Such a groove can be easily made in a joining component, being so made either retroactively or directly during production of the joining component.

According to a further preferred embodiment, the joining component is a welding component that is rotationally symmetrical about a longitudinal axis, such as a welding stud.

It is particularly advantageous in this case if the joining surface is realized to be annular.

Such a joining surface is used, in particular, in the case of so-termed annular-flange studs, or welding nuts.

It is particularly advantageous in this case if the recess is aligned radially in relation to the longitudinal axis. The welding surface is thereby divided into a plurality of circular or ring sectors.

According to an alternative embodiment, the joining component is a flat component having an end face, on which the welding surface is realized.

The welding surface in the case of this embodiment is normally polygonal, being realized, in the simplest case, to be approximately rectangular. In this case, preferably, the at least one recess extends transversely relative to the longest side of the polygon form (consequently, transversely in the case of a rectangle, preferably perpendicular relative to the longitudinal side).

Overall, it is advantageous if the recess has a depth of at least 0.5 mm, in particular, in the range from 0.5 mm to 3 mm.

It has been found that particularly good weld results are rendered achievable by recesses of such depths.

In the case of all embodiments, the joining surface is realized, either as a planar surface that is placed flatly onto the surface of the workpiece, or, as an alternative thereto, the welding surface can also be realized to taper conically. Further, the joining component according to the invention can be used not only in combination with the drawn arc ignition process, mentioned at the outset, in the case of stud welding. Use in the case of the so-termed tip ignition process is also possible (in the case of the latter, there is provided at the welding surface a welding tip that is placed onto the workpiece, the welding current is then being switched on immediately, such that the welding tip substantially vaporizes).

Particularly preferably, the joining component is realized as a welding stud having an annular flange, the welding stud being made of aluminium. The welding of aluminium annular-flange studs onto aluminium workpieces has hitherto always caused great difficulty. Owing to the design of the joining component according to the invention, significant increases in the strength of the weld joints can be achieved.

It is understood that the above-mentioned features and those to be explained in the following can be applied, not only in the respectively specified combination, but also in other combinations or singly, without departure from the scope of the present invention.

Exemplary embodiments of the invention are represented in the drawing and explained more fully in the following description, wherein:
- Fig. 1: shows a schematic representation of two fastening arrangements according to the invention;
- Fig. 2: shows a perspective schematic representation of a joining component according to a first embodiment;
- Fig. 3: shows a schematic view, from below, of a further embodiment of a joining component according to the invention;
- Fig. 4: shows a further schematic view, from below, of a joining component according to the invention;
- Fig. 5: shows a schematic side view of a further embodiment of a joining component according to the invention, in the form of an annular- flange stud; and
- Fig. 6: shows a perspective view of a further embodiment of a flat joining component according to the invention.

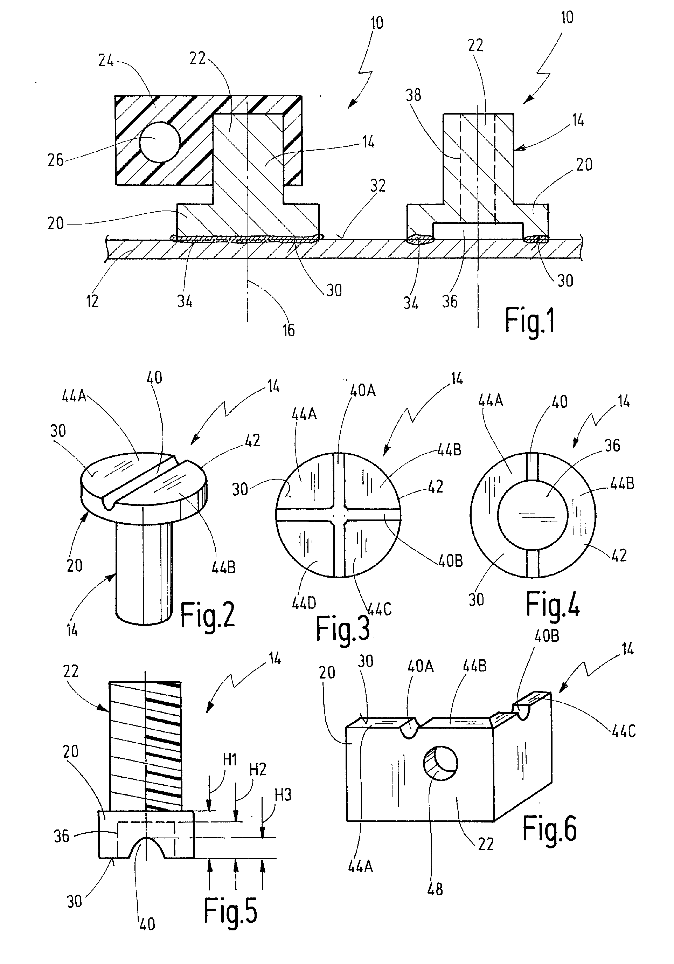

In Fig. 1, a fastening arrangement is denoted in general by the reference 10.

The fastening arrangement 10 comprises a flat workpiece 12 of an electrically conductive material, for example in the form of a vehicle-body metal sheet. Further, the fastening arrangement 10 has a joining component 14 in the form of a welding stud, which is joined onto the workpiece 12 along a longitudinal axis.

The joining component 14 comprises a joining portion 20, in the form of a flange, and comprises a fastening portion 22, in the form of a shank. A further structural element, in the form of a plastic clip 24, is fastened to the fastening portion 22, for example by being clipped-on. For this purpose, the fastening portion 22 can have a corresponding locking contour, for example in the form of a thread (not represented in Fig. 1).

A receiving portion 26, for receiving a line (electrical line or brake line, etc.) can be realized on the structural element 24. Consequently, such a line (or another object) can be fastened to the workpiece 12 by means of the fastening arrangement 10.

The joining portion 20 has a circular joining or welding surface 30, via which the joining component 14 is welded onto a surface 32 of the workpiece 12, for example by means of the stud welding process mentioned at the outset. A thereby constituted joining zone, in the form of a cooled melt, which effects a materially bonded connection between the joining component 14 and the flat workpiece 12, is shown at reference 34 in Fig. 1.

In the case of the fastening arrangement 10 shown on the left in Fig. 1, the joining component 14 is composed, as a single-piece welding stud, of a solid material. Shown in the representation on the right in Fig. 1 is an alternative embodiment of a joining component 14, wherein the joining portion 20 has a circular cavity 36 in the region of the welding surface 30. In the case of this embodiment, the welding surface 30 is realized as an annular surface. The fastening portion 22 of the joining component 14 can be realized as a solid shank, but it can also be realized to have a longitudinal bore 38, as represented on the right in Fig. 1 by broken lines.

The fastening arrangements 10 shown in Fig. 1 each have joining components 14 that, prior to the creation of the joint, had realized in the joining surface at least one recess that extends transversely relative to the circumference and divides the joining surface into at least two partial surfaces.

Such joining components 14 are shown in the following Figs. 2 to 6. These joining components correspond in general, in respect of structure and functioning, to the joining components shown in Fig. 1. Elements that are the same are therefore denoted by the same reference numerals. In the following, it is, in essence, the differences that are explained.

Shown in Fig. 2 is a joining component 14 that corresponds substantially to the joining component 14 on the left in Fig. 1. In this case, a recess 40, in the form of an elongate groove extending radially relative to the longitudinal axis 16, is realized in the joining surface. The recess 40 extends transversely relative to a circular circumference 42 of the welding surface 30 and divides the welding surface 30 into two partial surfaces 44A, 44B, which each correspond in their form approximately to a circular sector that describes 180° (semicircle).

A modified embodiment of the joining component 14 of Fig. 2 is shown in Fig. 3. In this case, the welding surface 30 is divided into four partial surfaces 44A-44D by means of a first recess 40A, in the form of an elongate groove, and a second recess 40B, in the form of an elongate groove, aligned perpendicularly thereto. The partial surfaces 44A-44D each correspond in their form to circular sectors that describe 90°.

Fig. 4 shows a further embodiment of a joining component 14, which corresponds in general to the joining component 14 on the right in Fig. 1, and which has a central, circular cavity 36. A recess 40, in the form of an elongate groove extending transversely relative to the longitudinal axis 16, is realized in the thus constituted annular welding surface 30, such that the welding surface 30 is divided into two ring sectors 44A, 44B.

Fig. 5 shows a modified embodiment of the joining component 14 of Fig. 4. In this case, likewise, the joining component 14 has a joining portion 20 having a cavity 36, and a recess 40, in the form of an elongate groove, is realized in the welding surface 30.

In the case of this embodiment, the fastening portion 22 is realized, on its outer circumference, by a thread, which is indicated schematically.

The joining portion 20 is realized as a flange portion, and has a height H1. The cavity 36 has a depth H2, and the recess 40 has a depth H3.

The depth H3 of the recess 40 is less than the depth H2 of the cavity 36. Further, the depth H2 of the cavity 36 is less than the height H1 of the joining portion 20.

In Fig. 6, an alternative embodiment of a joining component 14 is realized in the form of a flat component. The joining component 14 can be realized to be L-shaped, C-shaped, S-shaped or, also, straight in cross-section. In Fig. 6, the joining portion 14 is realized, exemplarily, to be L-shaped in cross-section, and has a consequently L-shaped welding surface 30. Realized in the welding surface 30 are two recesses 40A, 40B, each of which is aligned transversely relative to a longitudinal side of the welding surface 30. The welding surface 30 is thereby divided into three partial surfaces 44A, 44B and 44C. It can further be seen in Fig. 6 that a fastening hole 48 can be realized, exemplarily, in one of the L-limbs, via which fastening hole a further structural element can be fastened to the joining component 14.

In the case of the above embodiments, there are shown in each case one or two elongate recesses 40, in the form of grooves, which divide the joining surface 30. As an alternative thereto, it is also possible to provide a multiplicity of such recesses 40, such that the joining surface as a whole is fluted.

Further, the recesses 40 are each realized to be continuous from one circumferential portion to an opposing circumferential portion. As an alternative thereto, the recesses can also be interrupted, in such a way that the welding surface is substantially divided into partial surfaces.

## Claims

1. Joining component (14) for joining onto a flat workpiece (12), in particular for the purpose of stud welding, having a joining portion (20), by means of which the joining component (14) can be joined onto the workpiece (12), and having a fastening portion (22), which is realized as a single piece with the joining portion (20) and to which at least one further structural element (24) can be fastened, the joining portion (20) having a joining surface (30) that contacts the flat workpiece (12) during joining and has a circumference (42),
there being realized in the joining surface (30) at least one recess (40) that extends transversely relative to the circumference (42) and that divides the joining surface (30) into at least two partial surfaces (44).

2. Joining component according to Claim 1, the recess (40) being realized as an elongate groove.

3. Joining component according to Claim 1 or 2, the joining component (14) being a welding component that is rotationally symmetrical about a longitudinal axis (16).

4. Joining component according to Claim 3, the joining surface (30) being realized to be annular.

5. Joining component according to Claim 3 or 4, the recess (40) being aligned radially in relation to the longitudinal axis (16).

6. Joining component according to Claim 1 or 2, the joining component (14) being a flat component having an end face, on which the welding surface (30) is realized.

7. Joining component according to any one of Claims 1 to 6, the recess (40) having a depth (H3) of at least 0.5 mm.

8. Fastening arrangement (10) having a flat workpiece (12) onto which a joining component (14) according to any one of Claims 1 to 7 is joined.
